Europäisches Patentamt

European Patent Office

Office européen des brevets

(11) Numéro de publication: **0 307 292 B1**

# (12) FASCICULE DE BREVET EUROPEEN

(45) Date de publication de fascicule du brevet: **30.09.92**  (51) Int. Cl.5: **H01M 6/34**

(21) Numéro de dépôt: **88402218.7**

(22) Date de dépôt: **02.09.88**

(54) **Dispositif pour former et faire circuler un électrolyte liquide dans une pile alcaline amorcable.**

(30) Priorité: **03.09.87 FR 8712236**

(43) Date de publication de la demande:
**15.03.89 Bulletin  89/11**

(45) Mention de la délivrance du brevet:
**30.09.92 Bulletin  92/40**

(84) Etats contractants désignés:
**DE FR GB IT SE**

(56) Documents cités:
EP-A- 0 067 703     EP-A- 0 268 828
WO-A-84/02428       US-A- 2 953 111
US-A- 3 510 361     US-A- 3 941 616
US-A- 4 012 234     US-A- 4 198 474

PATENT ABSTRACTS OF JAPAN, vol. 9, no.
110 (E-314)[1833], 15 mai 1985; & JP-A-60
1764 (NIHON DENCHI K.K.) 07-01-1985

PATENT ABSTRACTS OF JAPAN, vol. 6, no.
189 (E-133)[1067], 28 septembre 1982; & JP-
A-57 103 271 (YUASA DENCHI K.K.)
26-06-1982

(73) Titulaire: **ETAT-FRANCAIS représenté par le
DELEGUE GENERAL POUR L'ARMEMENT
(DPAG)
Bureau des Brevets et Inventions de la Délégation Générale pour l'Armement 26, Boulevard Victor
F-75996 Paris Armées(FR)**

(72) Inventeur: **Charlot, Yves
Allée de l'Eglantine La Roseraie
La-Ouerencia F-83240 Cavalaire(FR)**
Inventeur: **Carmillet, Jean-Pierre
13, Impasse des Mésanges
F-83120 Sainte-Maxime(FR)**
Inventeur: **Manent, Bernard
Lotissement Caillat 7, rue Jean Giono
F-83310 Cogolin(FR)**
Inventeur: **Potiron, André
15, Les Nouveaux Horizons
F-78000 Elancourt(FR)**

Rank Xerox (UK) Business Services

## Description

La présente invention a pour objet un dispositif pour former et faire circuler un électrolyte liquide dans une pile alcaline sèche.

Le secteur technique de l'invention est celui de la construction des piles électrochimiques amorçables de type alcalin fournissant l'énergie électrique destinée à la propulsion d'engins maritimes.

On connaît des piles alcalines fonctionnant avec une cathode en oxyde d'argent (Ag-O) et une anode qui est composée d'un métal soluble dans l'lectrolyte, qui est une solution alcaline à base de soude ou de potasse, l'anode pouvant être en aluminium, en lithium ou en un alliage de l'un de ces métaux ou en alliage mixte d'aluminium et de lithium.

On sait que le couple oxyde d'argent-aluminium est un couple très actif et irréversible, qui fonctionne en électrolyte alcalin à des températures comprises entre 55°C et 85°C.

On utilise des piles électrochimiques alcalines pour alimenter en courant continu les moteurs électriques des propulseurs d'engins immergés tels que des torpilles ou des engins mer-mer ou air-mer.

Dans ce cas, les piles sont stockées sèches, c'est-à-dire que la soude ou la potasse destinées à former l'électrolyte sont à l'état anhydre et l'électrolyte liquide est formé au moment même où l'engin rentre dans l'eau par admission d'eau de mer dans le circuit.

La formation et la circulation de l'électrolyte posent de nombreux problème liés au maintien de la température de l'électrolyte entre 55°C et 85°C, à l'évacuation des calories et des produits de réaction (hydrogène), au fonctionnement en équipression avec la mer pour les engins sous-marins, à la formation rapide de l'électrolyte à partir de l'eau de mer, à l'évacuation de l'électrolyte à la fin d'une utilisation d'un engin d'exercice afin de récupérer celui-ci.

Le problème posé par le démarrage rapide des piles amorçables de type alcalin, donc du temps de formation de l'électrolyte que l'on souhaite le plus court possible, n'est pas résolu à ce jour.

On connaît, par exemple par le brevet US 3953239, des piles de ce type, où l'entrée de l'eau de mer se fait directement dans un compartiment contenant l'électrolyte anhydre. Il y a dissolution progressive de la réserve d'électrolyte, puis circulation par passage de l'électrolyte au travers d'un conduit d'aspiration d'une pompe, qui envoie l'électrolyte vers le bloc électrochimique. L'électrolyte est ensuite dégazé et retourne au réservoir ; il circule en circuit fermé dans lequel est toutefois prévue une purge pour évacuer les gaz présents au début du remplissage. Un tel dispositif présente nécessairement des difficultés de démarrage pour certaines immersions : il faut en effet des immersions importantes pour supprimer la poche de gaz présente dans le conduit d'aspiration de la pompe, qui risque d'être désamorcée.

Le brevet JP-A-601764 décrit une pile de ce type où la difficulté présente est supprimée en amorçant initialement et momentanément le bloc électrochimique avec de l'eau de mer qui arrive directement dans ce bloc pour permettre un démarrage sûr. Mais le bloc électrochimique d'une pile de ce type, composé le plus souvent d'une empilage de cathodes à l'oxyde d'argent et d'anodes en aluminium, lithium ou en alliages de ces métaux, est très fortement passivé lorsqu'il est amorcé à l'eau de mer. Il en résulte un démarrage très lent, ce qui est incompatible avec les exigences de l'utilisation dans une torpille par exemple.

Par ailleurs, le brevet US-3 510 361 décrit un dispositif d'amorçage rapide de batterie présentant une membrane formant un réservoir d'electrolyte, et déchirable sous l'effet de cet électrolyte poussé par un piston actionné par des gaz produits par un générateur pyrotechnique.

L'objectif de l'invention est de procurer un dispositif de formation très rapide et de circulation d'un électrolyte liquide dans une pile amorçable qui permette de résoudre ces divers problèmes.

Un dispositif selon l'invention est embarqué sur un engin maritime et il comporte, de façon connue :

- un bloc électrochimique composé d'un empilage de cathodes à l'oxyde d'argent et d'anodes en aluminium, lithium ou en alliage de ces métaux ;
- un réservoir contenant des produits alcalins qui sont à l'état anhydre pendant le stockage ;
- et un circuit qui comporte une pompe de circulation, un séparateur d'hydrogène et des moyens pour faire entrer l'eau de mer dans le circuit, ces moyens présentant un conduit qui communique librement en permanence avec la mer, et ce circuit permet de recycler l'électrolyte alcalin liquide entre le réservoir et le bloc électrochimique.

Les objectifs de l'invention sont atteints au moyen d'un dispositif dans lequel le réservoir et le bloc électrochimique sont séparés par une cloison et sont connectés entre eux par deux conduits qui traversent cette cloison et qui comportent chacun une membrane déchirable qui isole le réservoir du bloc électrochimique pendant le stockage et qui se déchire lorsque l'électrolyte liquide commence à circuler.

Ainsi, l'amorçage est réalisé en deux temps tout d'abord, le bloc électrochimique est isolé du réservoir contenant l'électrolyte en formation par des membranes déchirables. L'eau de mer est aspirée par la pompe de circulation, mise en route par exemple par une pile auxiliaire, et injectée à fort débit dans le réservoir contenant les produits alcalins où l'électrolyte se forme par brassage. Dans un deuxième temps, la montée en pression due à la pompe provoque la rupture des membranes, et l'amorçage quasi-instantané du bloc électrochimique.

De préférence, le conduit d'admission permanente de l'eau de mer est connecté directement sur le conduit d'admission de la pompe de circulation, dont le conduit de refoulement est connecté au réservoir contenant les produits alcalins.

Cette disposition permet de résoudre le problème du désamorçage de la pompe qui peut se produire dans la phase de démarrage puis, par la suite, lors des remontées rapides de la torpille. En effet, après la phase d'amorçage, la vanne d'amorçage ouvre le passage de l'électrolyte du dégazeur vers la pompe, mettant ainsi la pile en circuit fermé. L'orifice d'aspiration sur la mer reste ouvert permettant ainsi un amorçage de la pompe par la mer par un effet d'autorégulation.

Selon un mode de réalisation préférentiel, le séparateur d'hydrogène est un séparateur gaz-liquide centrifuge dont le centre communique avec la mer à travers un clapet de non retour et dont la périphérie est reliée à l'aspiration de la pompe de circulation par un conduit de liaison comportant un orifice calibré.

Avantageusement, ce conduit de liaison comporte, en outre, une vanne d'amorçage commandée par un actionneur et le conduit d'entrée d'eau de mer est connecté en dérivation sur le conduit de liaison à l'aval de la vanne d'amorçage.

Enfin, la disposition du conduit d'arrivée permanente de l'eau de mer associée à la présence d'un clapet anti-retour, assure de façon simple un fonctionnement stable du système de dégazage sans risque de bouchage ou de perte d'électrolyte vers la mer.

L'invention a pour résultat de nouveaux dispositifs permettant de remplir une pile alcaline amorçable équipant un engin immergé, d'un électrolyte liquide qui est obtenu au moment où l'engin pénètre dans l'eau en dissolvant rapidement un produit alcalin anhydre par de l'eau de mer qui pénètre dans l'engin. Ainsi, pendant le stockage, le poids de l'engin est plus réduit et la pile reste sèche. L'amorçage est accéléré pour l'obtention de courants continus pour l'alimentation de moteurs électriques, notamment de propulseurs sous-marins.

Grâce à la communication permanente du circuit dans lequel circule l'électrolyte liquide avec la mer, le compartiment contenant un dispositif selon l'invention est en équipression avec la mer et n'a pas à résister à des différences de pression d'où une construction mécanique allégée. De plus, la communication permanente avec la mer permet des échanges entre le circuit et la mer, de sorte que la régulation du volume de liquide plus gaz dans le circuit en boucle se fait automatiquement.

La présence d'une vanne d'amorçage motorisée permet d'organiser la circulation dans le circuit, de façon à réaliser le remplissage en fluide et la purge des gaz initialement contenus dans le système. Elle permet d'abaisser la concentration de l'électrolyte en produits de dissolution de l'anode. Elle permet également de vidanger l'électrolyte et de rincer le circuit sur un engin d'exercice.

La description suivante se réfère aux dessins annexés qui représentent, sans aucun caractère limitatif, un exemple de réalisation d'un dispositif selon l'invention.

La figure 1 est une coupe axiale partielle du compartiment d'un engin immergé contenant une pile alcaline et un dispositif selon l'invention pour former un électrolyte alcalin à partir de l'eau de mer, lequel dispositif est représenté à l'état sec.

La figure 2 est une coupe axiale analogue à la figure 1 représentant le même dispositif pendant la circulation de l'électrolyte.

La figure 3 est une vue schématique, à plus grande échelle, d'une partie du dispositif selon la figure 2 pendant la circulation de l'électrolyte.

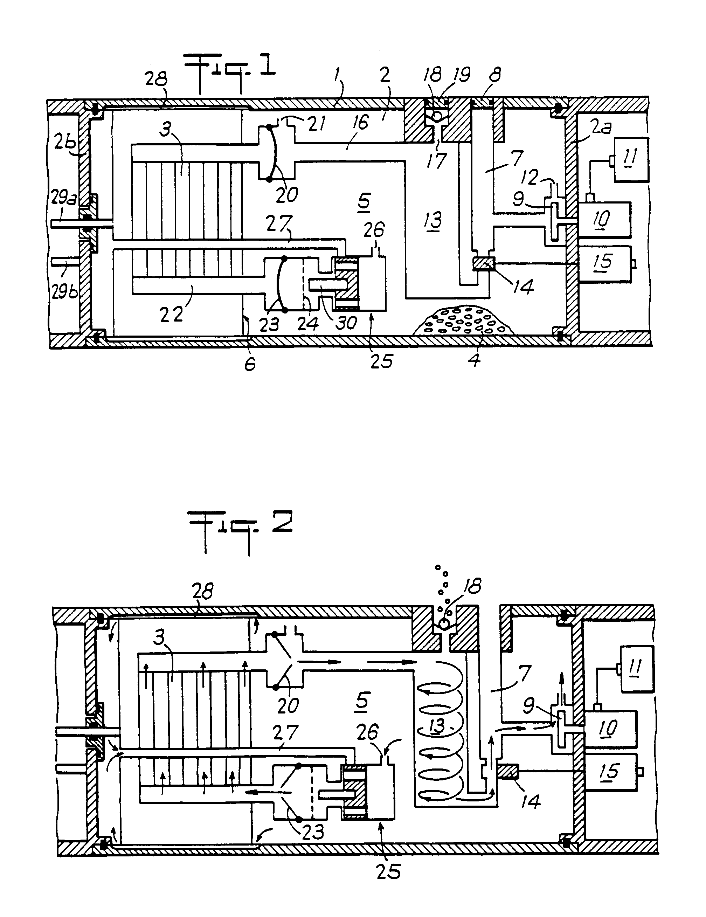

La figure 1 est une coupe axiale partielle d'un engin maritime autopropulsé qui comporte une coque 1 cylindrique et qui peut être par exemple une torpille, un engin militaire air-mer ou mer-mer ou sol-mer ou un robot d'exploration sous-marine. La coque est divisé en plusieurs compartiments par des cloisons transversales et la figure représente schématiquement un compartiment 2 qui est compris entre deux cloisons 2a, 2b et qui contient une pile électrochimique 3, destinée à fournir du courant continu à un moteur électrique, non représenté, qui entraîne le propulseur de l'engin.

La pile 3 fonctionne avec un électrolyte alcalin et les composés alcalins à base de soude ou de potasse sont stockés à l'état de produits anhydres 4, dont tout ou partie se trouve sous forme pulvérulente à l'intérieur du réservoir 5 qui fait partie du compartiment 2 et qui est séparé du bloc électrochimique par une cloison 6.

L'électrolyte liquide est formé, au moment même où l'engin arrive au contact de l'eau, par de l'eau de mer qui pénètre dans le réservoir 5, par un conduit 7, dont une extrémité est obturée par un bouchon largable 8 qui est éjecté ou brisé au moment où l'engin arrive dans l'eau, ou juste avant, de sorte que l'eau de mer peut pénétrer librement dans le conduit 7. Le conduit 7 communique avec l'aspiration d'une pompe de circulation 9, qui est entraînée par un moteur électrique 10, lequel est alimenté par une petite pile auxiliaire 11.

Le refoulement 12 de la pompe débouche directement dans le compartiment 5. Le conduit 7 communique avec la périphérie d'un dégazeur 13 par l'intermédiaire d'une vanne d'amorçage 14 qui est une vanne motorisée entraînée par un actionneur 15.

Le dégazeur 13 est un séparateur gaz-liquide de type centrifuge qui met le liquide en rotation à grande vitesse en créant un tourbillon, de sorte que le liquide d'accumule à la périphérie et le gaz au centre.

L'extrémité supérieure du dégazeur 13 est connectée tangentiellement sur un conduit 16 qui traverse la cloison 6 et qui recueille l'électrolyte sortant du bloc électrochimique 3. Cet électrolyte est une dispersion d'hydrogène dans le liquide et le dégazeur 13 sépare la phase liquide de la phase gazeuse. L'hydrogène gazeux s'accumule au centre et il est évacué à l'extérieur de la coque 1 par un conduit 17 qui est équipé d'un clapet anti-retour 18 et qui communique avec l'extérieur par un orifice qui est obturé au départ par un bouchon largable 19.

Pendant le stockage, le conduit 16 est obturé par un opercule déchirable 20. Le réservoir 5 communique directement avec le conduit 16 par un orifice 21 qui sert d'évent pour évacuer l'air contenu dans le réservoir lorsque l'électrolyte liquide commence à se former et à le remplir. La pression régnant dans le réservoir 5 étant supérieure à celle qui règne dans le conduit 16, l'orifice 21 situé à la partie supérieure du réservoir 5 permet, en outre, d'évacuer l'hydrogène résiduel qui reste dans l'électrolyte après passage dans le dégazeur 13 et qui s'accumule dans le haut du réservoir.

L'orifice 21 est un petit orifice calibré dans le débit est limité, de telle sorte qu'il corresponde à un débit de fuite compris entre 2% et 5% du débit de la pompe 9.

Le dispositif selon la figure 1 comporte un deuxième conduit 22 qui traverse la cloison 6 et qui met en communication le réservoir 5 avec le bloc électrochimique 3.

Le conduit 22 sert à amener l'électrolyte liquide à l'entrée de l'empilage d'électrodes. Il est équipé d'un opercule déchirable 23, d'un filtre 24 et d'une vanne thermostatique à trois voies 25 ayant une voie de sortie qui communique avec le conduit 22, une voie d'entrée 26 qui communique directement avec le réservoir 5 et une deuxième voie d'entrée qui communique avec un conduit 27, qui reçoit de l'électrolyte qui a été refroidi en passant dans un échangeur refroidisseur 28 situé entre la coque 1 et le bloc électrochimique 3. Les repères 29a et 29b représentent les conducteurs par lesquels sort le courant continu produit par la pile.

Le fonctionnement d'un dispositif selon l'invention est le suivant. La figure 1 représente l'état du dispositif pendant le stockage de l'engin. Les bouchons 8 et 19 sont en place. Les produits alcalins 4 sont à l'état anhydre. Les opercules 20 et 23 sont en place. Le réservoir 5 contient des produits alcalins anhydres 4 et il est isolé de l'extérieur et du bloc électrochimique et l'engin peut subir un stockage de durée.

Le fait que les produits alcalins sont à l'état anhydre, permet un gain de poids important pour des engins de type air-mer.

Au moment où l'engin est lancé ou au moment où il atteint l'eau, les bouchons 8 et 19 sont largés automatiquement.

Le moteur 10 est alimenté par la pile auxiliaire 11 et il entraîne la pompe 12 qui force l'eau de mer à pénétrer rapidement dans le réservoir 5 à travers le conduit 7.

Les produits alcalins anhydres 4 se dissolvent et cette réaction qui est exothermique entraîne la montée en température de l'électrolyte qui atteint rapidement la température minima de 55°.

La vanne d'amorçage 14 qui est fermée évite le recyclage de l'électrolyte. Le clapet anti-retour 19 évite l'entrée d'eau dans le dégazeur 13. L'évent 21 permet d'évacuer le gaz contenu dans le réservoir 5.

L'électrolyte liquide mis en pression par la pompe fait éclater d'abord l'opercule 23 qui a une résistance à l'éclatement plus faible que celle de l'opercule 20. Le bloc électrochimique 3 se remplit d'électrolyte, provoquant l'apparition d'une tension électrique. L'opercule 20 éclate ensuite. L'électrolyte emplit le circuit et commence à s'échapper à la mer par l'orifice 19. Lorsque la tension fournie par la pile atteint un seuil déterminé, un relais bascule et la pile 3 prend le relais de la pile auxiliaire 11 pour alimenter le moteur 10.

Après une temporisation déterminée, l'actionneur 15 entraîne l'ouverture de la vanne d'amorçage 14, de sorte que l'électrolyte peut circuler en circuit fermé en traversant le dégazeur 13.

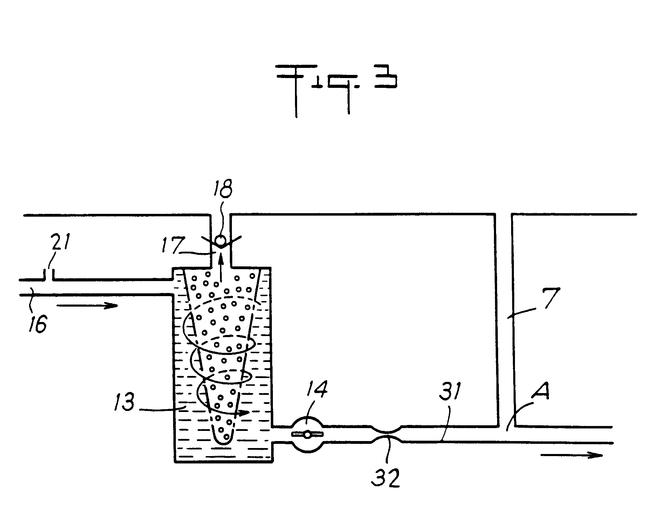

La circulation de l'électrolyte s'établit en suivant les trajets représentés par des flèches sur la figure 2.

L'électrolyte s'échauffe et se charge d'hydrogène lors du passage à travers le bloc électrochimique 3. Le dégazeur 13 sépare l'hydrogène du liquide et l'hydrogène est évacué à la mer à travers le clapet 18.

La circulation de l'électrolyte se répartit en deux flux. Un premier flux est constitué par de l'électrolyte refroidi qui pénètre dans la vanne thermostatique 25 par le conduit 27, après être passé dans l'échangeur 28. Un deuxième flux est constitué par de l'électrolyte plus chaud qui pénètre dans la vanne thermostatique 25 à travers l'orifice 26.

La vanne thermostatique 25 règle les proportions respectives des deux flux pour obtenir une température de consigne déterminée au niveau de la sonde de température 30 qui l'équipe et qui est disposée dans le flux sortant de la vanne et entrant dans le bloc électrochimique.

A la fin d'une phase d'utilisation d'un engin d'exercice, l'actionneur 15 commande la fermeture de la vanne 14. Il en résulte que la pompe 12 aspire de l'eau de mer qui remplace progressivement l'électrolyte qui est châssé àl'extérieur à travers le clapet 18.

La circulation forcée de l'électrolyte mis en mouvement par la pompe 12 permet d'extraire efficacement la chaleur produite au coeur de l'empilage électrochimique et d'éviter une élévation de température excessive. Elle permet également d'éliminer rapidement de la surface de l'électrode d'aluminium la couche passivante qui s'y forme grâce à la vitesse de circulation de l'électrolyte.

Le circuit dans lequel circule l'électrolyte est en communication permanente avec la mer par le conduit 7 et il est donc maintenu en équipression. Ceci permet d'alléger et de simplifier les organes destinés à l'évacuation des produits de réaction à la mer (chaleur, hydrogène, produits de dissolution de l'anode). Pour les engins qui peuvent être immergés en profondeur, cette disposition permet un allègement de la coque 1 qui n'a pas à résister à des différences de pression importantes. Par contre, les cloisons 2a, 2b doivent résister à la pression d'immersion.

La circulation de l'électrolyte liquide dans un circuit en boucle qui communique en permanence avec la mer entraîne toutefois les difficultés suivantes. Le circuit en boucle a un volume constant dans lequel on fait circuler une quantité déterminée d'électrolyte. Cet électrolyte se charge en hydrogène qui est séparé et évacué par le dégazeur. Toutefois, une portion du circuit est remplie d'une émulsion d'hydrogène dans laquelle des variations du volume de la phase gazeuse se produisent.

En effet, la pression dans le circuit étant égale à la pression externe, toute variation de la profondeur d'immersion entraîne une variation de volume de la phase gazeuse.

De plus, le bloc électrochimique a en général plusieurs régimes de décharge électrique auxquels correspondent des débits d'hydrogène différents qui modifient les caractéristiques physiques du mélange de phases gazeuse et liquide. Il est donc nécessaire d'ajuster la qualité de liquide contenue dans le circuit.

Dans un dispositif selon l'invention, le réglage de la quantité de liquide dans le circudit en boucle se fait automatiquement grâce à la communication permanente de ce circuit avec la mer.

La figure 3 représente, à plus grande échelle, la combinaison d'éléments qui concourrent pour produire cet ajustement automatique.

On trouve sur cette figure le dégazeur 13 à tourbillon qui comporte, à son sommet, un conduit 17 équipé d'un clapet anti-retour 18 qui communique avec la mer.

L'électrolyte liquide venant du bloc électrochimique arrive tangentiellement dans le haut du dégazeur par le conduit 16 équipé d'un évent de purge 21. Il en ressort par un conduit 31 qui comporte un orifice calibré 32 et qui se dirige vers l'aspiration de la pompe 9. Le conduit 7, qui communique directement avec la mer, est branché en dérivation sur le conduit 31 en un point A situé en aval de l'orifice calibré 32.

La vanne d'amorçage 14, qui est en position ouverte pendant le recyclage de l'électrolyte, est située sur le conduit 31 en amont du branchement du conduit 7.

On a représenté en traits mixtes la limite approximative de séparation entre le gaz et le liquide dans le séparateur à tourbillon 13.Le gaz s'accumule au centre et il est évacué à la mer à travers le conduit 17 par la légère surpression qui règne dans le dégazeur.

La phase liquide plus dense est repoussée par la force centrifuge contre les parois latérales et l'état est caractérisé par l'épaisseur de la lame liquide qui définit une pression statique à l'intérieur du dégazeur due à la récupération partielle de l'énergie cinétique du fluide.

En régime de recyclage permanent, il y a égalité au point A entre le débit de liquide aspiré par la pompe et celui qui provient du dégazeur et il n'y a aucun échange d'eau avec la mer qui donne seulement une référence de pression.

L'orifice calibré 32 permet, grâce à la perte de charge qu'il crée, d'ajuster l'épaisseur de la lame liquide dans le dégazeur à une valeur compatible avec le bon fonctionnement de cet appareil.

Le dispositif est auto-adaptatif pour corriger automatiquement toute perturbation entraînant une variation de volume de la phase gazeuse.

Si une perturbation entraîne par exemple une diminution de volume de la phase gazeuse, le débit de liquide traversant le dégazeur diminue d'où l'apparition d'une inégalité au point A entre le débit aspiré par la pompe et celui qui provient du dégazeur, laquelle est compensée immédiatement par une entrée d'eau de mer par le conduit 7. A tout instant, le dégazeur 13 a un fonctionnement stable car l'épaisseur de la lame liquide s'adapte en fonction de la perte créée par l'orifice calibré qui varie avec le débit.

En sens inverse, une perturbation entraînant une augmentation de volume de la phase gazeuse entraîne automatiquement une sortie de liquide vers la mer à travers le conduit 7 qui corrige le volume.

La vanne d'amorçage 14, qui est fermée pendant le remplissage du circuit en électrolyte liquide permet d'organiser le sens de remplissage du circuit et de purger l'air.

Dans le cas d'un engin d'exercice, à la fin des exercices, la fermeture de la vanne d'amorçage 14 alors que la pompe 9 est toujours en route permet de vidanger l'électrolyte à la mer et de rincer le circuit avec de l'eau de mer.

La vanne 25 de régulation de température qui est commandée par une sonde thermostatique 30, placée à l'entrée du bloc électrochimique 3, permet de régler la température de la pile à une valeur de fonctionnement optimum.

La position de la vanne 25 en amont du bloc électrochimique présente un autre avantage pour le démarrage dans un environnement à température élevée. La quantité de chaleur fournie par la dissolution de l'électrolyte anhydre est déterminée pour chauffer suffisamment l'éleclyte dans un environnement à basse température.

Si le dispositif se trouve placé à la frontière haute de la plage de température d'environnement, la solution d'électrolyte sera trop chaude. Dans ce cas, la vanne thermostatique 25 va fonctionner immédiatement et le bloc électrochimique sera alimenté avec un électrolyte refroidi par passage dans l'échangeur de température 28.

La régulation de la concentration dans l'électrolyte des produits de dissolution de l'anode est obtenue par l'actionnement de la vanne d'amorçage 14 en cours de fonctionnement de la pile. Si cette concentration dépasse un seuil déterminé, on ferme la vanne 14 pendant un temps donné, ce qui permet de vidanger à la mer une partie de l'électrolyte existant et de le remplacer par de l'eau de mer qui entre dans le circuit par le conduit 7 afin de ramener la concentration à une valeur acceptable.

**Revendications**

1. Dispositif pour former et faire circuler un électrolyte liquide dans une pile alcaline amorçable embarquée sur un engin maritime (1), lequel dispositif est du type comportant :
   - un bloc électrochimique (3), composé d'un empilage de cathodes à l'oxyde d'argent et d'anodes en aluminium, lithium ou en alliages de ces métaux ;
   - un réservoir contenant des produits alcalins (4) qui sont à l'état anhydre pendant le stockage ;
   - et un circuit qui comporte une pompe de circulation (9), un séparateur d'hydrogène (13), un échangeur de température (28) et des moyens pour faire entrer l'eau de mer dans le circuit, ces moyens comprenant un conduit (7) qui communique librement en permanence avec la mer, lequel circuit permet de recycler l'électrolyte alcalin liquide entre le réservoir et le bloc électrochimique (3), caractérisé en ce que le réservoir et le bloc électrochimique sont séparés par une cloison (6) et sont connectés entre eux par deux conduits (16, 22) qui traversent cette cloison et qui comportent chacun une membrane déchirable (20, 23) qui isole le réservoir du bloc électrochimique pendant le stockage et qui se déchire lorsque l'électrolyte liquide commence à circuler.

2. Dispositif selon la revendication 1, caractérisé en ce que le conduit (7) est connecté directement sur le conduit d'aspiration de la pompe de circulation (9), dont le conduit de refoulement est connecté au réservoir (5).

3. Dispositif selon la revendication 1, caractérisé en ce que le conduit de retour (16) de l'électrolyte liquide qui relie le bloc électrolytique (3) au séparateur d'hydrogène (13) comporte un orifice d'évent (21) qui débouche dans le réservoir (5).

4. Dispositif selon la revendication 1 comportant une vanne thermostatique à trois voies, caractérisé en ce que la vanne est placée à l'entrée du conduit (22) d'entrée de l'électrolyte dans le bloc électrochimique.

5. Dispositif selon la revendication 1, caractérisé en ce que le séparateur d'hydrogène (3) est un séparateur centrifuge gaz-liquide dont le centre communique avec la mer à travers un clapet de non retour (18) et dont la périphérie est reliée à l'aspiration de la pompe (9) par un conduit (31) de liaison comportant un orifice calibrée (32).

6. Dispositif selon la revendication 5, caractérisé en ce qe le conduit de liaison (31) comporte, en outre, une vanne d'amorçage (14) commandée par un actionnaire (15) et le conduit (7) d'entrée d'eau de mer est connecté en dérivation sur le conduit de liaison (31) entre la vanne d'amorçage (14) et la pompe (9).

**Claims**

1. Device for forming and circulating a liquid electrolyte in an activatable alkaline battery fitted onto a sea missile (1), which device is of the type comprising:

- an electrochemical unit (3), made up of a stack of silver oxide cathodes and anodes made from aluminium, lithium or alloys of these metals;
- a reservoir containing alkaline products (4) which are in the anhydrous state while being stored;
- and a circuit which comprises a circulation pump (9), a hydrogen separator (13), a heat exchanger (28) and devices for making the sea water enter the circuit, with these devices comprising a pipe (7) which is at all times in free communication with the sea, which circuit enables the alkaline liquid electrolyte to be recycled between the reservoir and the electrochemical unit (3) characterized in that the reservoir and the electrochemical unit are separated by a partition (6) and are connected to each other via two pipes (16, 22) which pass through this partition and which each comprise a rupturable membrane (20, 23) which isolates the reservoir from the electrochemical unit during storage and which tears when the liquid electrolyte starts to flow.

2. Device according to claim 1, characterized in that the pipe (7) is directly connected to the suction pipe of the circulation pump (9), whose delivery pipe is connected to the reservoir (5)

3. Device according to claim 1, characterized in that the return pipe (16) for the liquid electrolyte which connects the electrolytic unit (3) with the hydrogen separator (13) comprises a vent opening (21) which opens into the reservoir (5).

4. Device according to claim 1 comprising a three way thermostatic valve, characterized in that the valve is placed at the entrance to the pipe (22) via which the electrolyte enters the electrochemical unit.

5. Device according to claim 1 characterized in that the hydrogen separator (3) is a gas-liquid centrifuge whose centre is connected to the sea via a non-return valve (18) and whose periphery is connected to the suction pipe of the pump (9) via a connecting pipe (31) comprising a gauged orifice (32).

6. Device according to claim 5, characterized in that the connecting pipe (31) also comprises a priming valve (14) controlled by a actuating gear (15) and the sea water inlet pipe (7) is connected to branch off the connecting pipe (31) between the priming valve (14) and the pump (9).

## Patentansprüche

1. Vorrichtung zur Bildung und zum Umlauf eines flüssigen Elektrolyten in einer trockenen, zündbaren Alkalizelle, die auf einer Seerakete (1) installiert wird, wobei eine derartige Vorrichtung folgende Bestandteile umfasst:
   - einen elektrochemischen Block (3), bestehend aus einer Aufstapelung von Silberoxidkathoden und Anoden aus Aluminium, Lithium oder einer Legierung dieser beiden Metalle;
   - einen Speicherbehälter mit alkalischen Produkten (4), die während der Lagerung wasserfrei sind;
   - und einen Kreis mit einer Umwälzpumpe (9), einem Wasserstoffabscheider (13), einem Temperaturtauscher (28) und Mitteln zum Meerwassereinlass in den Kreis, wobei diese Mittel eine Leitung (7) aufweisen, die in ständiger Verbindung mit dem Meer steht, und dieser Kreis es gestattet, den flüssigen Alkalielektrolyten zwischen dem Speicherbehälter und dem elektrochemischen Block (3) umzuwälzen,

dadurch gekennzeichnet, dass der Speicherbehälter und der elektrochemische Block durch eine Trennwand (6) getrennt und durch zwei, diese Trennwand durchquerende Leitungen (16, 22) miteinander verbunden sind, wobei diese Leitungen jeweils mit einer zerreissbaren Membran (20, 23) ausgestattet sind, die den Speicherbehälter während der Lagerung vom elektrochemischen Block isoliert und zerreisst, wenn der flüssige Elektrolyt umzulaufen beginnt.

2. Vorrichtung gemäss dem Anspruch 1, dadurch gekennzeichnet, dass die Leitung (7) direkt an die Ansaugleitung der Umwälzpumpe (9) angeschlossen ist, deren Rücklaufleitung an den Speicherbehälter (5) angeschlossen ist.

3. Vorrichtung gemäss dem Anspruch 1, dadurch gekennzeichnet, dass die Rückführleitung (16) des flüssigen Elektrolyten, die den elektrolytischen Block (3) mit dem Wasserstoffabscheider (13) verbindet, über eine Entlüftungsöffnung (21) verfügt, die im Speicherbehälter (5) mündet.

4. Vorrichtung gemäss dem Anspruch 1 mit einem thermostatischen Dreiwegeventil, dadurch gekennzeichnet, dass das Ventil am Eingang der Eintrittsleitung (22) des Elektrolyten im elektrochemischen Block angebracht ist.

5. Vorrichtung gemäss dem Anspruch 1, dadurch gekennzeichnet, dass der Wasserstoffabscheider (3) ein zentrifugaler Gas-Flüssigkeitsabscheider ist, dessen Zentrum über ein Rückschlagventil (18) mit dem Meer in Verbindung steht, und dessen Peripherie über eine Verbindungsleitung (31) mit einer kalibrierten Öffnung (32) an die Ansaugung der Pumpe (9) angeschlossen ist.

6. Vorrichtung gemäss dem Anspruch 5, dadurch gekennzeichnet, dass die Verbindungsleitung (31) u.a. mit einem von einem Betätigungsorgan (15) gesteuerten Zündventil (14) ausgestattet ist, und dass die Meerwassereintrittsleitung (7) in Abzweigung an die Verbindungsleitung (31) zwischen dem Zündventil (14) und der Pumpe (9) angeschlossen ist.

Fig. 1

Fig. 2

Fig. 3